(19) Europäisches Patentamt
European Patent Office
Office européen des brevets

(11) EP 1 951 809 B1

# (12) EUROPÄISCHE PATENTSCHRIFT

(45) Veröffentlichungstag und Bekanntmachung des Hinweises auf die Patenterteilung:
**09.04.2014 Patentblatt 2014/15**

(21) Anmeldenummer: **06778364.7**

(22) Anmeldetag: **28.08.2006**

(51) Int Cl.:
***C08L 33/12** (2006.01)* ***C08L 75/04** (2006.01)*

(86) Internationale Anmeldenummer:
**PCT/EP2006/065707**

(87) Internationale Veröffentlichungsnummer:
**WO 2007/057242 (24.05.2007 Gazette 2007/21)**

## (54) TRANSPARENTE TPU (THERMOPLASTISCHE POLYURETHANE) / PMMA(POLYMETHYL(METH) ACRYLAT) ABMISCHUNGEN MIT VERBESSERTER KÄLTESCHLAGZÄHIGKEIT

TRANSPARENT TPU (THERMOPLASTIC POLYURETHANES)/PMMA (POLYMETHYL (METH) ACRYLATE) BLENDS WITH IMPROVED LOW-TEMPERATURE IMPACT RESISTANCE

MELANGES TRANSPARENTS DE TPU (POLYURETHANNE THERMOPLASTIQUE) ET DE PMMA (POLYMETHYL(METH)ACRYLATE) PRESENTANT UNE RESISTANCE AUX CHOCS A BASSE TEMPERATURE AMELIOREE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.11.2005 DE 102005055793**

(43) Veröffentlichungstag der Anmeldung:
**06.08.2008 Patentblatt 2008/32**

(73) Patentinhaber:
- **Evonik Röhm GmbH**
  **64293 Darmstadt (DE)**
- **CPS GmbH**
  **83101 Thansau/Rohrdorf (DE)**

(72) Erfinder:
- **SCHULTES,Klaus**
  **65193 Wiesbaden (DE)**
- **BATTENHAUSEN, Peter**
  **63636 Brachttal-Udenhain (DE)**
- **GOLCHERT, Ursula**
  **64807 Dieburg (DE)**
- **LOIDL, Adalbert**
  **83349 Palling (DE)**

(56) Entgegenhaltungen:
**EP-A- 0 272 975**
**WO-A-03/066695**
**DE-A- 10 260 065**
**US-A- 3 700 752**
**US-A- 5 539 053**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 951 809 B1

## Beschreibung

Gebiet der Erfindung

Die vorliegende Erfindung betrifft transparente Abmischungen aus thermoplastischen Polyurethanen (TPU) mit Polymethyl(meth)acrylat (PMMA) und daraus hergestellt Kunststoffformkörper mit verbesserter Kälteschlagzähigkeit.

Stand der Technik

Schlagzähe Formmassen (sz-FM) auf PMMA-Basis werden im großen Umfang hergestellt. Eine erhöhte Schlagzähigkeit der Formmassen wird durch den Einsatz sogenannter Schlagzähmodifier erreicht. Diese Modifier werden in die entsprechenden PMMA Standardformmassen eincompoundiert.
Als Schlagzähmodifier bei PMMA Formmassen werden oft Kern/Schale/Schale (K/S1/S2) - Partikel (Partikelgröße 100 - 1000 nm) verwendet, welche üblicherweise über Emulsionspolymerisation hergestellt werden. Bei diesen K/S1/S2 Partikel besteht der Kern aus einem vernetzten Polymer, welches weitestgehend aus denselben Monomeren wie die Matrix aufgebaut ist (bis auf den Vernetzer). Die erste Schale (S1), welche die elastomere Phase bildet, besteht aus Butylacrylat - Kautschuk, der meist durch Copolymerisation von Styrol oder dessen Derivaten an den Brechungsindices der Matrix angepasst wird. Die zweite Schale bindet die Partikel an die Matrix und besteht aus einem unvernetzten Polymeren, deren Monomere den Bestandteilen der Matrix weitestgehend ähneln.
Aufgrund des Aufbaus der typischen Butylacrylat basierenden Schlagzähmodifier werden mit diesen keine hohen Schlagzähigkeiten bei tiefen Temperaturen (- 40 °Celsius) erreicht. Bei diesen Temperaturen verhärtet die Kautschukphase der Modifier.

Bei schlagzähen PMMA Formmassen kann grob in transparente und nicht transparente PMMA Formmassen unterschieden werden.
Transparente schlagzähe Formmassen werden in der Regel über Butylacrylat basierende Modifier hergestellt. Als Produkte sind hier zu nennen PLEXIGLAS® zk50 von der Fa. Röhm GmbH & Co. KG, ACRYLITE PLUS® zk6 von der Fa. Cyro und ALTUGLAS® DR von der Fa. Altuglas.

In den Patentschriften US 5 539 053 (Avenel), EP 0 272 975 (ALTULOR) und US 3 700 752 (Hutchnison) werden transparente, schlagzähe Abmischungen aus thermoplastischen Polyurethanen und Polymethylmethacrylaten beschrieben.

In dem Patent DE 41 36 993 (BASF AG), "Transparente, schlagzähmodifizierte PMMA Formmassen mit verbesserter Tieftemperatur Schlagzähigkeit und hoher Bewitterungsstabilität", wird eine ähnliche Zusammensetzung wie in US - PS 3,793,402 beschrieben. Hier ist allerdings der Einbau eines Acrylsäure-phenyl-C1-C4-alkylesters in die Zähphase (S1) notwendig. In den Beispielen werden PMMA Formmassen mit guter Kälteschlagzähigkeit beschrieben; die hierbei beste Formmasse (Beispiel 6) setzt sich wie folgt zusammen:

Modifier:

Kern: MMA - Allylmethacrylat - Methylacrylat = 98,6 - 0,5 - 0,9
Schale 1: Butylacrylat - Phenylethylacrylat - Allylmethacrylat-1,4-Butandiölmethacrylat = 72,3 - 25,8 - 1,4 - 0,5
Schale 2: MMA - Methylacrylat = 96,0 - 4,0
K/S1/S2 Verhältnis = 20 / 50 / 30

PMMA Formmasse: ca. Molekulargewicht 100.000 g / mol,
MMA - Methylacrylat = 99 - 1

Mischungsverhältnis Formmasse / Modifier = 45 / 55 (Massenverhältnisse) Diese Formmasse hat ein Izod Schlagzähigkeit bei Raumtemperatur von 85 und bei - 20 °C von 52 $kJ/m^2$.

Bei den üblichen schlagzähen Formmassen fällt die Schlagzähigkeit ab - 10 °C deutlich ab. Auch liegt der E-Modul bei hochschlagzähen Formmassen wie PLEXIGLAS® zk50 bei 950 MPa. Das E-Modul liegt zwar bei den schlagzähen Formmassen wie Acrylite Plus® zk6 bei hohen 1800 MPa, allerdings liegen hier die Schlagzähigkeitswerte nur bei 80 kJ/m2.

Werden witterungsbeständige, bei tiefen Temperaturen schlagzähe PMMA Formmassen hergestellt, sind diese meist nicht transparent. Hier sind als Stand der Technik folgende Patentanmeldungen bzw. Patente zu nennen. WO 2003/066695: Hier wird die gute Kälteschlagzähigkeit durch die Verwendung von Silikonkautschukmodifier erreicht.
DE 10 260 065 A1: Durch Reduzierung der Styrolmenge in Butylacrylatkautschuk des Modifier erhält man durch Einsatz eines solchen Modifiers eine gute Kälteschlagzähigkeit bei bis zu -20 °C. Allerdings geht durch die Reduzierung der Styrolmenge die Transparenz der Formmasse deutlich zurück (Die Brechungindices von Butylacrylatkautschuk und

PMMA sind unterschiedlich).

Aufgabe

Es sollte nun eine auf PMMA basierende Abmischung gefunden werden, bei der die Schlagzähigkeit auch bei tiefen Temperaturen gegeben ist. Daneben sollte Formkörper, hergestellt aus diesem Compound durch Spritzguss oder Extrusion, eine noch akzeptable Transparenz aufweisen und mit den üblichen Farben bedruckbar sein. Daneben sollten die Formkörper witterungsbeständig sein und noch einen hohen Zugmodul haben. Unter "tiefen Temperaturen" im Sinne der Erfindung werden Temperaturen im Bereich von beispielsweise - 10 °C bis - 40 °C verstanden. Unter "akzeptabler Transparenz" wird ein Transmissionswert von beispielsweise ca. 80 % verstanden (d = 3 mm).

Lösung

Durch Abmischungen schlagzäh modifizierter PMMA Formmassen und thermoplastischen Polyurethanen (TPU) (Massenverhältnis zwischen schlagzähem PMMA / TPU = 50 / 90 bis 80 / 10) kann die Aufgabe erfüllt werden. Bevorzugt ist ein Masseverhältnis von PMMA zu TPU von 70 Teilen PMMA zu 30 Teilen TPU, besonders bevorzugt ist ein Massenverhältnis von PMMA zu TPU von 60 Teilen PMMA zu 40 Teilen TPU

So liegen die Schlagzähigkeitswerten dieser Abmischungen nach Charpy bei 23 °Celsius bei über 100 kJ/m2 und bei -40 °Celsius noch bei 23 kJ/m2 (und damit deutlich höher als bei schlagzähmodifizierten transparenten PMMA). Daneben liegt die Transmission von 3 mm starken Probekörpern aus diesem Material noch über 80%. Folien aus diesen Blends lassen sich deutlich leichter bedrucken als hier üblich eingesetzte Folien aus Polyamid oder TPU / MABS - Blends und sind witterungsbeständig.

Der Ausdruck (Meth)acrylat umfasst im Rahmen der vorliegenden Erfindung Methacrylate und Acrylate sowie Mischungen aus beiden.

Als PMMA-Formmasse wird eine Mischung aus zwei (Meth)acrlytpolymeren, Komponete a.) und Komponete b.) eingesetzt.

Komponente a.)

Polymethylmethacrylate werden im allgemeinen durch radikalische Polymerisation von Mischungen erhalten, die Methylmethacrylat enthalten.

Im allgemeinen enthalten diese Mischungen mindestens 40 Gew.-%, vorzugsweise mindestens 60 Gew.-% und besonders bevorzugt mindestens 80 Gew.-%, bezogen auf das Gewicht der Monomere, Methylmethacrylat.

Daneben können diese Mischungen zur Herstellung von Polymethylmethacrylaten weitere (Meth)acrylate enthalten, die mit Methylmethacrylat copolymerisierbar sind. Der Ausdruck (Meth)acrylate umfasst Methacrylate und Acrylate sowie Mischungen aus beiden.

Diese Monomere sind weithin bekannt. Zu diesen gehören unter anderem (Meth)acrylate, die sich von gesättigten Alkoholen ableiten, wie beispielsweise Methylacrylat, Ethyl(meth)acrylat, Propyl(meth)acrylat, n-Butyl(meth)acrylat, tert.-Butyl(meth)acrylat, Pentyl(meth)acrylat und 2-Ethylhexyl(meth)acrylat; (Meth)acrylate, die sich von ungesättigten Alkoholen ableiten, wie z. B. Oleyl(meth)acrylat, 2-Propinyl(meth)acrylat, Allyl(meth)acrylat, Vinyl(meth)acrylat; Aryl(meth)acrylate, wie Benzyl(meth)acrylat oder Phenyl(meth)acrylat, wobei die Arylreste jeweils unsubstituiert oder bis zu vierfach substituiert sein können; Cycloalkyl(meth)acrylate, wie 3-Vinylcyclohexyl(meth)acrylat, Bornyl(meth)acrylat; Hydroxylalkyl(meth)acrylate, wie 3-Hydroxypropyl(meth)acrylat, 3,4-Dihydroxybutyl(meth)acrylat, 2-Hydroxyethyl(meth)acrylat, 2-Hydroxypropyl(meth)acrylat; Glycoldi(meth)acrylate, wie 1,4-Butandiol(meth)acrylat, (Meth)acrylate von Etheralkoholen, wie Tetrahydrofurfuryl(meth)acrylat, Vinyloxyethoxyethyl(meth)acrylat; Amide und Nitrile der (Meth)acrylsäure, wie N-(3-Dimethylaminopropyl)(meth)acrylamid, N-(Diethylphosphono)(meth)acrylamid, 1-Methacryloylamido-2-methyl-2-propanol; schwefelhaltige Methacrylate, wie Ethylsulfinylethyl(meth)acrylat, 4-Thiocyanatobutyl(meth)acrylat, Ethylsulfonylethyl(meth)acrylat, Thiocyanatomethyl(meth)acrylat, Methylsulfinylmethyl(meth)acrylat, Bis((meth)acryloyloxyethyl)sulfid; mehrwertige (Meth)acrylate, wie Trimethyloylpropantri(meth)acrylat.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind. Hierzu gehören unter anderem 1-Alkene, wie Hexen-1, Hepten-1; verzweigte Alkene, wie beispielsweise Vinylcyclohexan, 3,3-Dimethyl-1-propen, 3-Methyl-1-diisobutylen, 4-Methylpenten-1; Acrylnitril; Vinylester, wie Vinylacetat; Styrol, substituierte Styrole mit einem Alkylsubstituenten in der Seitenkette, wie z. B. $\alpha$-Methylstyrol und $\alpha$-Ethylstyrol, substituierte Styrole mit einem Alkylsubstitutenten am Ring, wie Vinyltoluol und p-Methylstyrol, halogenierte Styrole, wie beispielsweise Monochlorstyrole, Dichlorstyrole, Tribromstyrole und Tetrabromstyrole; Heterocyclische Vinylverbindungen, wie 2-Vinylpyridin, 3-Vinylpyridin, 2-Methyl-5-vinylpyridin, 3-Ethyl-4-vinylpyridin, 2,3-Dimethyl-5-vinylpyridin, Vinylpyrimidin, Vinylpiperidin, 9-Vinylcarbazol, 3-Vinylcarbazol, 4-Vinylcarbazol, 1-Vinylimidazol, 2-Methyl-1-vinylimidazol, N-Vinylpyrrolidon, 2-Vinylpyrrolidon, N-Vinylpyrrolidin, 3-Vinylpyrrolidin, N-Vinylcaprolactam, N-Vinylbutyrolactam, Vinyloxolan, Vinylfuran, Vinylthiophen, Vinylthiolan, Vinylthiazole und hydrierte Vinylthiazole, Vinyloxazole und hydrierte Vinyloxazole; Vinyl- und Isoprenylether; Maleinsäurederivate, wie beispielsweise Maleinsäureanhydrid, Methylmaleinsäureanhydrid, Maleinimid, Methylmaleinimid; und Diene, wie beispielsweise Divinylbenzol.
Im allgemeinen werden diese Comonomere in einer Menge von 0 bis 60 Gew.-%, vorzugsweise 0 bis 40 Gew.-% und besonders bevorzugt 0 bis 20 Gew.-%, bezogen auf das Gewicht der Monomeren, eingesetzt, wobei die Verbindungen einzeln oder als Mischung verwendet werden können.
Die Polymerisation wird im allgemeinen mit bekannten Radikalinitiatoren gestartet. Zu den bevorzugten Initiatoren gehören unter anderem die in der Fachwelt weithin bekannten Azoinitiatoren, wie AIBN und 1,1-Azobiscyclohexancarbonitril, sowie Peroxyverbindungen, wie Methylethylketonperoxid, Acetylacetonperoxid, Dilaurylperoxyd, tert.-Butylper-2-ethylhexanoat, Ketonperoxid, Methylisobutylketonperoxid, Cyclohexanonperoxid, Dibenzoylperoxid, tert.-Butylperoxybenzoat, tert.-Butylperoxyisopropylcarbonat, 2,5-Bis(2-ethylhexanoyl-peroxy)-2,5-dimethylhexan, tert.-Butylperoxy-2-ethylhexanoat, tert.-Butylperoxy-3,5,5-trimethylhexanoat, Dicumylperoxid, 1,1-Bis(tert.-butylperoxy)cyclohexan, 1,1-Bis(tert.-butylperoxy)3,3,5-trimethylcyclohexan, Cumylhydroperoxid, tert.-Butylhydroperoxid, Bis(4-tert.-butylcyclohexyl)peroxydicarbonat, Mischungen von zwei oder mehr der vorgenannten Verbindungen miteinander sowie Mischungen der vorgenannten Verbindungen mit nicht genannten Verbindungen, die ebenfalls Radikale bilden können.
Diese Verbindungen werden häufig in einer Menge von 0,01 bis 10 Gew.-%, vorzugsweise von 0,5 bis 3 Gew.-%, bezogen auf das Gewicht der Monomeren, eingesetzt.
Hierbei können verschiedene Poly(meth)acrylate eingesetzt werden, die sich beispielsweise im Molekulargewicht oder in der Monomerzusammensetzung unterscheiden.
Des weiteren kann die Matrix weitere Polymere enthalten, um die Eigenschaften zu modifizieren. Hierzu gehören unter anderem Polyacrylnitrile, Polystyrole, Polyether, Polyester, Polycarbonate und Polyvinylchloride. Diese Polymere können einzeln oder als Mischung eingesetzt werden; wobei auch Copolymere, die von den zuvor genannten Polymere ableitbar sind.

Das Gewichtsmittel des Molekulargewichts Mw der erfindungsgemäss als Matrixpolymere zu verwendenden Homo- und/oder Copolymere kann in weiten Bereichen schwanken, wobei das Molekulargewicht üblicherweise auf den Anwendungszweck und die Verarbeitungsweise der Formmasse abgestimmt wird. Im allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne dass hierdurch eine Einschränkung erfolgen soll.

Komponente b)

Die Komponente b) ist ein Schlagzähmodifizierungsmittel auf Basis von vernetzten Poly(meth)acrylaten. Bevorzugt weist die Komponente b.) einen Kern / Schale / Schale Aufbau auf.

Bevorzugte Schlagzähmodifizierungsmittel sind Polymerisatteilchen, die einen Kern-Schale-Schale-Aufbau aufweisen und durch Emulsionspolymerisation erhalten werden können (s. z. B. EP-A 0 113 924, EP-A 0 522 351, EP-A 0 465 049 und EP-A 0 683 028). Typische Teilchengrößen (Durchmesser) dieser Emulsionspolymerisate liegen, im Bereich von 100 - 600 nm, bevorzugt 200 - 500 nm.
Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und Styrol aufgebaut sein, während die äußerste (harte) Schale im wesentlichen meist dem Matrixpolymerisat entspricht, wodurch die Verträglichkeit und gute Anbindung an die Matrix bewirkt wird.

**Vorzugsweise umfasst der Kern,** jeweils bezogen auf sein Gesamtgewicht,

**A)** 50,0 Gew.-%. bis 99,9 Gew.-%, zweckmäßigerweise 60,0 Gew.-%. bis 99,9 Gew.-%, vorzugsweise 75,0 Gew.-%. bis 99,9 Gew.-%, besonders bevorzugt 80,0 Gew.-%. bis 99,0 Gew.-%, insbesondere 85,0 Gew.-%. bis 99,0 Gew.- %, Alkylmethacrylat-Wiederholungseinheiten mit 1 bis 20, vorzugsweise 1 bis 12, insbesondere 1 bis 8, Kohlenstoffatomen im Alkylrest,
**B)** 0,0 Gew.-%. bis 40,0 Gew.-%, vorzugsweise 0,0 Gew.-%. bis 24,9 Gew.-%, zweckmäßigerweise 1,0 Gew.-%. bis 29,9 Gew.-% insbesondere 1,0 Gew.-%. bis 14,9 Gew.- %, Alkylacrylat-Wiederholungseinheiten mit 1 bis 20, vorzugsweise 1 bis 12, besonders bevorzugt 1 bis 8, insbesondere 1 bis 4, Kohlenstoffatomen im Alkylrest,
**C)** 0,1 Gew.-%. bis 2,0 Gew.-% vernetzende Wiederholungseinheiten und
**D)** 0,0 Gew.-%. bis 8,0 Gew.-% styrolische Wiederholungseinheiten der allgemeinen Formel (I)

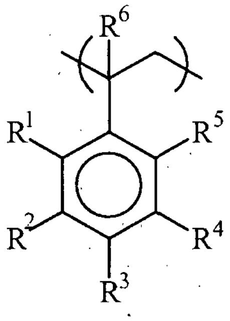

(I)

wobei sich die angegebenen Gewichtsprozente vorzugsweise zu 100,0 Gew.-% ergänzen.

Dabei sind die Verbindungen A), B), C) und D) natürlich voneinander verschieden, insbesondere umfassen die Verbindungen A) und B) keine vernetzenden Monomere C).

Die Reste R1 bis R5 bezeichnen jeweils unabhängig voneinander Wasserstoff, ein Halogen, insbesondere Fluor, Chlor oder Brom, oder eine Alkylgruppe mit 1 bis 6 Kohlenstoffatomen, vorzugsweise Wasserstoff. Der Rest R6 kennzeichnet Wasserstoff oder eine Alkylgruppe mit 1 bis 6 Kohlenstoffatomen, vorzugsweise Wasserstoff. Besonders geeignete Alkylgruppen mit 1 bis 6 Kohlestoffatomen sind Methyl-, Ethyl-, n-Propyl-, iso-Propyl-, n-Butyl-, sec-Butyl-, tert.-Butyl-, n-Pentyl-, n-Hexylgruppen sowie Cyclopentyl- und Cyclohexylgruppen.
Somit umfassen styrolische Wiederholungseinheiten der allgemeinen Formel (I) wiederkehrende Struktureinheiten, welche durch Polymerisation von Monomeren der allgemeinen Formel (Ia) erhältlich sind.

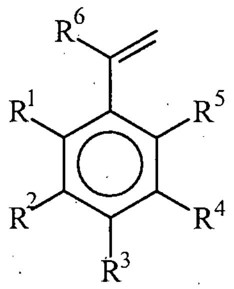

(Ia)

Geeignete Monomere der allgemeinen Formel (Ia) umfassen insbesondere Styrol, substituierte Styrole mit einem Alkylsubstituenten in der Seitenkette, wie beispielsweise $\alpha$-Methylstyrol und $\alpha$-Ethylstyrol, substituierte Styrole mit einem Alkylsubstituenten an dem Ring, wie beispielsweise Vinyltoluol und p-Methylstyrol, halogenierte Styrole, wie beispielsweise Monochlorstyrole, Dichlorstyrole, Tribromstyrole und Tetrabromstyrole.
Unter den oben erwähnten Alkylmethacrylat-Wiederholungseinheiten (A) werden wiederkehrende Struktureinheiten verstanden, welche durch Polymerisation von Estern der Methacrylsäure erhältlich sind. Geeignete Ester der Methacrylsäure umfassen insbesondere Methylmethacrylat, Ethylmethacrylat, Propylmethacrylat, Isopropylmethacrylat, n-Butylmethacrylat, sec-Butylmethacrylat, tert-Butylmethacrylat, Pentylmethacrylat, Hexylmethacrylat, Heptylmethacrylat, Octylmethacrylat, 2-Octylmethacrylat, Ethylhexylmethacrylat, Nonylmethacrylat, 2-Methyloctylmethacrylat, 2-tert.-Butylheptylmethacrylat, 3-iso-Propylheptylmethacrylat, Decylmethacrylat, Undecylmethacrylat, 5-Methylundecylmethacrylat, Dodecylmethacrylat, 2-Methyldodecylmethacrylat, Tridecylmethacrylat, 5-Methyltridecylmethacrylat, Tetradecylmethacrylat, Pentadecylmethacrylat, Hexadecylmethacrylat, 2-Methylhexadecylmethacrylat, Heptadecylmethacrylat, 5-iso-Propylheptadecylmethacrylat, 5-Ethyloctadecylmethacrylat, Octadecylmethacrylat, Nonadecylmethacrylat, Eicosylmethacrylat, Cycloalkylmethacrylate, wie beispielsweise Cyclopentylmethacrylat, Cyclohexylmethacrylat, 3-Vinyl-2-butylcyclohexylmethacrylat, Cycloheptylmethacrylat, Cyclooctylmethacrylat, Bornylmethacrylat und Isobornylmethacrylat.
Gemäß einer besonders bevorzugten Ausführungsform der vorliegenden Erfindung enthält der Kern, bezogen auf sein Gesamtgewicht, mindestens 50 Gew.-%, zweckmäßigerweise mindestens 60 Gew.-%, vorzugsweise mindestens 75 Gew.-%, insbesondere mindestens 85 Gew.-% Methylmethacrylat-Wiederholungseinheiten.
Unter den oben erwähnten Alkylacrylat-Wiederholungseinheiten (B) werden wiederkehrende Struktureinheiten verstanden, welche durch Polymerisation von Estern der Acrylsäure erhältlich sind. Geeignete Ester der Acrylsäure umfassen insbesondere Methylacrylat, Ethylacrylat, Propylacrylat, Isopropylacrylat, n-Butylacrylat, sec-Butylacrylat, tert-Butylacrylat, Pentylacrylat, Hexylacrylat, Heptylacrylat, Octylacrylat, 2-Octylacrylat, Ethylhexylacrylat, Nonylacrylat, 2-Methyloctylacrylat, 2-tert.-Butylheptylacrylat, 3-iso-Propylheptylacrylat, Decylacrylat, Undecylacrylat, 5-Methylundecylacrylat,

Dodecylacrylat, 2-Methyldodecylacrylat, Tridecylacrylat, 5-Methyltridecylacrylat, Tetradecylacrylat, Pentadecylacrylat, Hexadecylacrylat, 2-Methylhexadecylacrylat, Heptadecylacrylat, 5-iso-Propylheptadecylacrylat, 5-Ethyloctadecylacrylat, Octadecylacrylat, Nonadecylacrylat, Eicosylacrylat, Cycloalkylacrylate, wie beispielsweise Cyclopentylacrylat, Cyclohexylacrylat, 3-Vinyl-2-butyl-cyclohexylacrylat, Cycloheptylacrylat, Cyclooctylacrylat, Bornylacrylat und Isobornylacrylat. Unter den oben erwähnten vernetzenden Wiederholungseinheiten (C) werden wiederkehrende Struktureinheiten verstanden, welche durch Polymerisation von vernetzenden Monomeren erhältlich sind. Geeignete vernetzende Monomere umfassen insbesondere alle die Verbindungen, welche in der Lage sind, unter den vorliegenden Polymerisationsbedingungen eine Vernetzung herbeizuführen. Hierzu gehören insbesondere

(a) Difunktionelle (Meth)acrylate, vorzugsweise

Verbindungen der allgemeinen Formel:

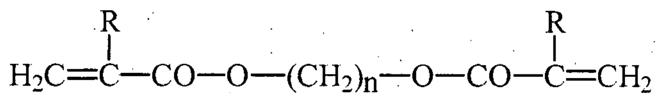

worin R Wasserstoff oder Methyl ist und n eine positive ganze Zahl größer gleich 2, vorzugsweise zwischen 3 und 20 bezeichnet, insbesondere Di(meth)acrylate des Propandiols, Butandiols, Hexandiols, Octandiols, Nonandiols, Decandiols und des Eicosandiols;

Verbindungen der allgemeinen Formel:

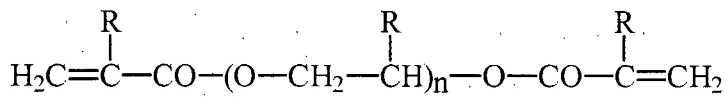

worin R Wasserstoff oder Methyl ist und n eine positive ganze Zahl zwischen 1 und 14 bedeutet, insbesondere Di(meth)acrylate des Ethylenglycols, Diethylenglycols, Triethylenglycols, Tetraethylenglycols, Dodecaethylenglycols, Tetradecaethylenglycols, Propylenglycols, Dipropylglycols und des Tetradecapropylenglycols. Glycerindi(meth)acrylat, 2,2'- Bis[p-(γ-methacryloxy-β-hydroxypropoxy)-phenylpropan] oder Bis-GMA, Biphenol-A-dimethacrylat, Neopentylglycoldi(meth)acrylat, 2,2'-Di(4-methacryloxypolyethoxyphenyl)propan mit 2 bis 10 Ethoxygruppen pro Molekül und 1,2-Bis(3-methacryloxy-2- hydroxypropoxy)butan.

(b) Tri- oder polyfunktionelle (Meth)acrylate, insbesondere Trimethylolpropantri(meth)acrylate und Pentaerythritoltetra(meth)acrylat. Pfropfvernetzer mit mindestens zwei unterschiedlich reaktiven C-C-Doppelbindungen, insbesondere Allylmethacrylat und Allylacrylat; aromatische Vernetzer, insbesondere 1,2-Divinylbenzol, 1,3-Divinylbenzol und 1,4-Divinylbenzol.

Vorzugsweise erfolgt die Auswahl der Gewichtsanteile der Bestandteile A) bis D) des Kerns derart, dass der Kern eine Glasübergangstemperatur Tg von mindestens 10 °C, vorzugsweise von mindestens 30 °C, aufweist.
Dabei kann die Glasübergangstemperatur Tg des Polymerisates in bekannter Weise mittels Differential Scanning Calorimetry (DSC) ermittelt werden. Weiterhin kann die Glasübergangstemperatur Tg auch mittels der Fox-Gleichung näherungsweise voraus berechnet werden. Nach Fox T. G., Bull. Am. Physics Soc. 1, 3, Seite 123 (1956) gilt:

$$\frac{1}{Tg} = \frac{x_1}{Tg_1} + \frac{x_2}{Tg_2} + \ldots + \frac{x_n}{Tg_n}$$

wobei xn für den Massebruch (Gew.-%/100) des Monomeren n steht und Tgn die Glasübergangstemperatur in Kelvin des Homopolymeren des Monomeren n bezeichnet. Weitere hilfreiche Hinweise kann der Fachmann dem Polymer Handbook 2nd Edition, J. Wiley & Sons, New York (1975) entnehmen, welche Tg-Werte für die geläufigsten Homopolymerisate angibt.
Die erste Schale der erfindungsgemäßen Kern-Schale-Schale-Teilchen weist eine Glasübergangstemperatur kleiner 30° C, vorzugsweise kleiner 10 °C, insbesondere im Bereich von 0 bis -75 °C, auf. Dabei kann die Glasübergangstemperatur Tg des Polymerisates, wie vorstehend bereits erwähnt, mittels Differential Scanning Calorimetry (DSC) ermittelt

und/oder mittels der Fox-Gleichung näherungsweise voraus berechnet werden.

**Die erste Schale** umfasst, bezogen auf ihr Gesamtgewicht, die nachstehenden Bestandteile:

80,0 Gew.-%. bis 98,0 Gew.-% (Meth)acrylat-Wiederholungseinheiten und
2,0 Gew.-%. bis 20,0 Gew.-% styrolische Wiederholungseinheiten der allgemeinen Formel (I),

wobei sich die Gewichtsprozente zu 100 Gew.-% addieren.
Im Rahmen einer ganz besonders bevorzugten Ausführungsform der vorliegenden Erfindung umfasst die erste Schale

E-1) 80,0 Gew.-%. bis 97,9 Gew.-% Alkylacrylat-Wiederholungseinheiten mit 3 bis 8 Kohlenstoffatomen im Alkylrest und/oder Alkylmethacrylat-Wiederholungseinheiten mit 7 bis 14 Kohlenstoffatomen im Alkylrest, insbesondere Butylacrylat- und/oderDodecylmethacrylat-Wiederholungseinheiten, und
E-2) 0,1 Gew.-%. bis 2,5 Gew.-% vernetzende Wiederholungseinheiten,
F) 2,0 Gew.-%. bis 20,0 Gew.-% styrolische Wiederholungseinheiten der allgemeinen Formel (I),

wobei sich die Gewichtsteile vorzugsweise zu 100,0 Gew.-Teilen addieren.
Dabei sind die Verbindungen E-1), E-2) und F) natürlich voneinander verschieden, insbesondere umfassen die Verbindungen E-1) keine vernetzenden Monomere E-2).

**Die zweite Schale** umfasst, bezogen auf ihr Gesamtgewicht, mindestens 75 Gew.-% (Meth)acrylat-Wiederholungseinheiten. Sie enthält vorzugsweise
50,0 Gew.-%. bis 100,0 Gew.-%, zweckmäßigerweise 60,0 Gew.-%. bis 100,0 Gew.-%, besonders bevorzugt 75,0 Gew.-%. bis 100,0 Gew.-%, insbesondere 85,0 bis 99,5 Gew.-%, Alkylmethacrylat-Wiederholungseinheiten mit 1 bis 20, vorzugsweise 1 bis 12, insbesondere 1 bis 8, Kohlenstoffatomen im Alkylrest,
0,0 Gew.-%. bis 40,0 Gew.-%, vorzugsweise 0,0 Gew.-%. bis 25,0 Gew.-%, insbesondere 0,1 Gew.-%. bis 15,0 Gew.-%, Alkylacrylat-Wiederholungseinheiten mit 1 bis 20, vorzugsweise 1 bis 12, insbesondere 1 bis 8, Kohlenstoffatomen im Alkylrest,
0,0 Gew.-%. bis 10,0 Gew.-%, vorzugsweise 0,0 Gew.-%. bis 8,0 Gew.-% styrolische Wiederholungseinheiten der allgemeinen Formel (I),
wobei dich die angegebenen Gewichtsprozente vorzugsweise zu 100,0 Gew.-% addieren.
Gemäß einer besonders bevorzugten Ausführungsform der vorliegenden Erfindung enthält die zweite Schale, bezogen auf ihr Gesamtgewicht, mindestens 50 Gew.-%, zweckmäßigerweise mindestens 60 Gew.-%, vorzugsweise mindestens 75 Gew.-%, insbesondere mindestens 85 Gew.-% Methylmethacrylat-Wiederholungseinheiten.
Weiterhin erfolgt die Auswahl der Bestandteile der zweiten Schale günstigerweise derart, dass die zweite Schale eine Glasübergangstemperatur Tg von mindestens 10 °C, vorzugsweise von mindestens 30 °C, aufweist. Dabei kann die Glasübergangstemperatur Tg des Polymerisates, wie vorstehend bereits erwähnt mittels Differential Scanning Calorimetry (DSC) ermittelt und/oder mittels der Fox-Gleichung näherungsweise voraus berechnet werden.

Der Gesamtradius des Kern-Schale-Teilchens inklusive der gegebenenfalls vorhandenen zweiten Schale liegt im Bereich von größer 160 bis 260 nm, vorzugsweise im Bereich von 170 bis 255 nm, insbesondere im Bereich von 175 bis 250 nm. Dabei wird der Gesamtradius gemäß dem Coulter-Verfahren bestimmt. Dieses in der Literatur bekannte Verfahren zur Partikelgrößen-Bestimmung beruht auf der Messung des elektrischen Widerstands, der sich beim Durchtritt von Teilchen durch eine enge Messöffnung in charakteristischer Weise ändert. Weitere Details können beispielsweise Nachr. Chem. Tech. Lab. 43, 553-566 (1995) entnommen werden.

Weiterhin hat es sich für die Zwecke der vorliegenden Erfindung als ganz besonders günstig erwiesen, dass, jeweils bezogen auf sein Gesamtgewicht,
der Kern 5,0 Gew.-%. bis 50,0 Gew.-%, vorzugsweise 15,0 Gew.-%. bis 50,0 Gew.-%, zweckmäßigerweise 25,0 Gew.-%. bis 45,0 Gew.-%, insbesondere 30,0 Gew.-%. bis 40,0 Gew.-%,
die erste Schale 20,0 Gew.-%. bis 75,0 Gew.-%, vorzugsweise 30,0 Gew.-%. bis 60,0 Gew.-%, zweckmäßigerweise 35,0 Gew.-%. bis 55,0 Gew.-%, insbesondere 40,0 Gew.-%. bis 50 Gew.-%, und
die zweite Schale 0,0 Gew.-%. bis 50,0 Gew.-%, vorzugsweise 5,0 Gew.-%. bis 40,0 Gew.-%, zweckmäßigerweise 10,0 Gew.-%. bis 30,0 Gew.-%, insbesondere 15,0 Gew.-%. bis 25,0 Gew.-%,
ausmacht, wobei sich die Gewichtsprozente vorzugsweise zu 100,0 Gew.-% addieren.

Die Herstellung der erfindungsgemäßen Kern-Schale-Teilchen kann auf an sich bekannte Weise, beispielsweise mittels mehrstufiger Emulsionspolymerisation erfolgen. Zweckmäßigerweise erfolgt sie durch ein Verfahren, bei welchem man Wasser und Emulgator vorlegt. Dabei enthält die Vorlage vorzugsweise 90,00 bis 99,99 Gew.-Teile Wasser und 0,01 bis 10,00 Gew.-Teile Emulgator, wobei sich die angegebenen Gewichtsteile günstigerweise zu 100,00, Gewichtsteilen addieren.
Zu dieser Vorlage werden dann schrittweise in der folgenden Reihenfolge die Monomere für den Kern in den gewünschten Verhältnissen zugegeben und bis zu einem Umsatz von mindestens 85,0 Gew.-%, vorzugsweise mindestens 90,0 Gew.-

%, zweckmäßigerweise mindestens 95,0 Gew.-%, insbesondere mindestens 99 Gew.-%, jeweils bezogen auf ihr Gesamtgewicht, polymerisiert,
die Monomere für die erste Schale in den gewünschten Verhältnissen zugegeben und bis zu einem Umsatz von.mindestens 85,0 Gew.-%, vorzugsweise mindestens 90,0 Gew.-%, zweckmäßigerweise mindestens 95,0 Gew.-%, insbesondere mindestens 99 Gew.-%, jeweils bezogen auf ihr Gesamtgewicht, polymerisiert,
gegebenenfalls die Monomere für die zweite Schale in den gewünschten Verhältnissen zugegeben und bis zu einem Umsatz von mindestens 85,0 Gew.-%, vorzugsweise mindestens 90,0 Gew.-%, zweckmäßigerweise mindestens 95,0 Gew.-%, insbesondere mindestens 99 Gew.-%, jeweils bezogen auf ihr Gesamtgewicht, polymerisiert.
Dabei bezeichnen Polymere im Sinne der vorliegenden Erfindung Verbindungen, welche im Vergleich mit der jeweiligen Ausgangsverbindung A) bis I), dem so genannten Monomer, mindestens das zehnfache Molekulargewicht aufweisen.
Die Verfolgung des Reaktionsfortschrittes der Polymerisation in jeden Schritt kann auf bekannte Weise, beispielsweise gravimetrisch oder mittels Gaschromatographie erfolgen.
Gemäß der vorliegenden Erfindung wird die Polymerisation in den Schritten b) bis d) vorzugsweise bei einer Temperatur im Bereich von 0 bis 120 °C, vorzugsweise im Bereich von 30 bis 100 °C durchgeführt.

Dabei haben sich Polymersiationstemperaturen im Bereich von größer 60 bis kleiner 90 °C, zweckmäßigerweise im Bereich von größer 70 bis kleiner 85 °C, vorzugsweise im Bereich von größer 75 bis kleiner 85 °C, als ganz besonders günstig erwiesen.
Die Initiierung der Polymerisation erfolgt mit den für die Emulsionspolymerisation gebräuchlichen Initiatoren. Geeignete organische Initiatoren sind beispielsweise Hydroperoxide, wie tert.-ButylHydroperoxid oder Cumolhydroperoxid. Geeignete anorganische Initiatoren sind Wasserstoffperoxid sowie die Alkalimetall- und die Ammoniumsalze der Peroxodischwefelsäure, insbesondere Natrium- und Kaliumperoxodisulfat. Geeignete Redox-Initiatorsysteme sind beispielsweise Kombinationen von tertiären Aminen mit Peroxiden oder Natriumdisulfit und Alkalimetall- und die Ammoniumsalze der Peroxodischwefelsäure, insbesondere Natrium- und Kaliumperoxodisulfat, oder besonders bevorzugt Peroxide. Weitere Details können der Fachliteratur, insbesondere H. Rauch-Puntigam, Th. Völker, "Acryl- und Methacrylverbindungen", Springer, Heidelberg, 1967 oder Kirk-Othmer, Encyclopedia of Chemical Technology, Vol. 1, Seiten 386ff, J. Wiley, New York, 1978 entnommen werden. Im Rahmen der vorliegenden Erfindung ist der Einsatz von organischen und/oder anorganischen Initiatoren besonders bevorzugt.
Die genannten Initiatoren können sowohl einzeln als auch in Mischung verwendet werden. Sie werden vorzugsweise in einer Menge von 0,05 bis 3,0 Gew.-%, bezogen auf das Gesamtgewicht der Monomere der jeweiligen Stufe, eingesetzt. Man kann auch bevorzugt die Polymerisation mit einem Gemisch verschiedener Polymerisationsinitiatoren unterschiedlicher Halbwertzeit durchführen, um den Radikalstrom im Verlauf der Polymerisation sowie bei verschiedenen Polymerisationstemperaturen konstant zu halten.

Die Stabilisierung des Ansatzes erfolgt vorzugsweise mittels Emulgatoren und/oder Schutzkolloiden. Bevorzugt wird die Stabilisierung durch Emulgatoren, um eine niedrige Dispersionsviskosität zu erhalten. Die Gesamtmenge an Emulgator beträgt vorzugsweise 0,1 bis 5 Gew.-%, insbesondere 0,5 bis 3 Gew.-%, bezogen auf das Gesamtgewicht der Monomere A) bis I). Besonders geeignete Emulgatoren sind anionische oder nichtionische Emulgatoren oder deren Mischungen, insbesondere: Alkylsulfate, vorzugsweise solche mit 8 bis 18 Kohlenstoffatomen im Alkylrest, Alkyl- und Alkylarylethersulfate mit 8 bis 18 Kohlenstoffatomen im Alkylrest und 1 bis 50 Ethylenoxideinheiten;
Sulfonate, vorzugsweise Alkylsulfonate mit 8 bis 18 Kohlenstoffatomen im Alkylrest, Alkylarylsulfonate mit 8 bis 18 Kohlenstoffatomen im Alkylrest, Ester und Halbester der Sulfobernsteinsäure mit einwertigen Alkoholen oder Alkylphenolen mit 4 bis 15 Kohlenstoffatomen im Alkylrest; gegebenenfalls können diese Alkohole oder Alkylphenole auch mit 1 bis 40 Ethylenoxideinheiten ethoxyliert sein;
Phosphorsäureteilester und deren Alkali- und Ammoniumsalze, vorzugsweise Alkyl- und Alkylarylphosphate mit 8 bis 20 Kohlenstoffatomen im Alkyl- bzw. Alkylarylrest und 1 bis 5 Ethylenoxideinheiten;
Alkylpolyglykolether, vorzugsweise mit 8 bis 20 Kohlenstoffatomen im Alkylrest und 8 bis 40 Ethylenoxideinheiten;
Alkylarylpolyglykolether, vorzugsweise mit 8 bis 20 Kohlenstoffatomen im Alkyl-bzw. Alkylarylrest und 8 bis 40 Ethylenoxideinheiten;
Ethylenoxid/Propylenoxid-Copolymere, vorzugsweise Blockcopolymere, günstigerweise mit 8 bis 40 Ethylenoxid- bzw. Propylenoxideinheiten. Erfindungsgemäß bevorzugt werden Gemische aus anionischem Emulgator und nichtionischen Emulgator eingesetzt. Dabei haben sich Gemische aus einem Ester oder Halbester der Sulfobernsteinsäure mit einwertigen Alkoholen oder Alkylphenolen mit 4 bis 15 Kohlenstoffatomen im Alkylrest als anionischem Emulgator und einem Alkylpolyglykolether, bevorzugt mit 8 bis 20 Kohlenstoffatomen im Alkylrest und 8 bis 40 Ethylenoxideinheiten, als nichtionischem Emulgator in einem Gewichtsverhältnis von 8 : 1 bis 1 : 8 ganz besonders bewährt. Gegebenenfalls können die Emulgatoren auch in Mischung mit Schutzkolloiden eingesetzt werden. Geeignete Schutzkolloide umfassen u. a. teilverseifte Polyvinylacetate, Polyvinylpyrrolidone, Carboxymethyl-, Methyl-, Hydroxyethyl-, Hydroxypropyl-Cellulose, Stärken, Proteine, Poly(meth)acrylsäure, Poly(meth)acrylamid, Polyvinylsulfonsäuren, Melaminformaldehydsulfonate, Naphthalinformaldehydsulfonate, Styrol-Maleinsäure- und Vinylethermaleinsäure-Copolymere. Falls Schutzkolloide eingesetzt werden, erfolgt dies vorzugsweise in einer Menge von 0,01 bis 1,0 Gew.-%, bezogen auf die Gesamtmenge

der Monomere A) bis I). Die Schutzkolloide können vor dem Start der Polymerisation vorgelegt oder zudosiert werden. Der Initiator kann vorgelegt oder zudosiert werden. Weiterhin ist es auch möglich, einen Teil des Initiators vorzulegen und den Rest zudosieren. Bevorzugt wird die Polymerisation durch Erhitzen des Ansatzes auf die Polymerisationstemperatur und Zudosierung des Initiators, vorzugsweise in wässriger Lösung, gestartet. Die Dosierungen von Emulgator und Monomeren können separat durchgeführt werden oder als Gemisch. Bei der Zudosierung von Gemischen aus Emulgator und Monomer wird so vorgegangen, dass Emulgator und Monomer in einem dem Polymerisationsreaktor vorgeschalteten Mischer vorgemischt werden. Bevorzugt werden der Rest an Emulgator und der Rest an Monomer, welche nicht vorgelegt wurden, nach dem Start der Polymerisation getrennt voneinander zudosiert. Vorzugsweise wird mit der Dosierung 15 bis 35 Minuten nach dem Start der Polymerisation begonnen.

Weiterhin ist es für die Zwecke der vorliegenden Erfindung besonders vorteilhaft, dass die Vorlage ein so genanntes "Saatlatex" enthält, welches vorzugsweise durch Polymerisation von Alkyl(meth)acrylaten erhältlich ist und darüber hinaus günstigerweise einen Teilchenradius, im Bereich von 3,0 bis 20,0 nm aufweist. Diese kleinen Radien können nach einer definierten Aufpolymerisation des Saatlatex, bei der eine Schale um den Saatlatex aufgebaut wird und die Radien der so hergestellten Teilchen nach dem Coulter-Verfahren gemessen wurden, berechnet werden. Dieses in der Literatur bekannte Verfahren zur Partikelgrößen-Bestimmung beruht auf der Messung des elektrischen Widerstands, der sich beim Durchtritt von Teilchen durch eine enge Messöffnung in charakteristischer Weise ändert. Weitere Details können beispielsweise Nachr. Chem. Tech. Lab. 43, 553-566 (1995) entnommen werden. Zu dem Saatlatex werden die Monomerbestandteile des eigentlichen Kerns, d. h. die erste Zusammensetzung, vorzugsweise unter solchen Bedingungen zugegeben, dass die Bildung neuer Teilchen vermieden wird. Dadurch wird das in der ersten Verfahrensstufe entstehende Polymerisat schalenförmig um das Saatlatex herum gelagert. Analog werden die Monomerbestandteile des ersten Schalenmaterials (zweite Zusammensetzung) unter solchen Bedingungen zu dem Emulsionspolymerisat zugegeben, dass die Bildung neuer Teilchen vermieden wird. Dadurch wird das in der zweiten Stufe entstehende Polymerisat schalenförmig um den bestehenden Kern herum gelagert. Diese Vorgehensweise ist für jede weitere Schale entsprechend zu wiederholen.

Gemäß einer weiteren bevorzugten Ausführungsform der vorliegenden Erfindung werden die erfindungsgemäßen Kern-Schale-Teilchen durch ein Emulsionspolymerisationsverfahren erhalten werden, bei dem man anstatt des Saatlatexes einen langkettigen, aliphatischen Alkohol, vorzugsweise mit 12 bis 20 Kohlenstoffatomen, emulgiert vorlegt. In einer bevorzugten Ausführungsform dieses Verfahrens wird Stearylalkohol als langkettiger, aliphatischer Alkohol verwendet. Die Kern-Schale-Struktur wird analog zur oben beschriebenen Vorgehensweise durch schrittweise Zugabe und Polymerisation der entsprechenden Monomere unter Vermeidung der Bildung neuer Teilchen erhalten. Weitere Einzelheiten zum Polymerisationsverfahren kann der Fachmann den Patentschriften DE 3343766, DE 3210891, DE 2850105, DE 2742178 und DE 3701579 entnehmen.

Unabhängig von der konkreten Vorgehensweise hat es sich jedoch im Rahmen der vorliegenden Erfindung als ganz besonders günstig erwiesen, die zweite und die dritte Monomermischung nach Maßgabe des Verbrauchs zuzudosieren.

Die Einstellung der Kettenlängen, insbesondere der (Co)Polymerisate der zweiten Schale, kann durch Polymerisation des Monomers bzw. des Monomerengemisches in Gegenwart von Molekulargewichtsreglern erfolgen, wie insbesondere von den dafür bekannten Mercaptanen, wie beispielsweise n-Butylmercaptan, n-Dodecylmercaptan, 2-Mercaptoethanol oder 2-Ethylhexylthioglycolat, Pentaerythrittetrathioglycolat; wobei die Molekulargewichtsregler im allgemeinen in Mengen von 0,05 bis 5 Gew.-% bezogen auf das Monomerengemisch, bevorzugt in Mengen von 0,1 bis 2 Gew.-% und besonders bevorzugt in Mengen von 0,2 bis 1 Gew.-% auf das Monomerengemisch eingesetzt werden (vgl. beispielsweise H. Rauch-Puntigam, Th. Völker, "Acryl- und Methacrylverbindungen", Springer, Heidelberg, 1967; Houben-Weyl, Methoden der organischen Chemie, Bd. XIV/1. Seite 66, Georg Thieme, Heidelberg, 1961 oder Kirk-Othmer, Encyclopedia of Chemical Technology, Vol. 1, Seiten 296ff, J. Wiley, New York, 1978). Bevorzugt wird als Molekulargewichtsregler n-Dodecylmercaptan eingesetzt.

Nach Abschlussder Polymerisation kann zur Restmonomerentfernung in Anwendung bekannter Methoden nachpolymerisiert werden, beispielsweise mittels initiierter Nachpolymerisation.

Da sich das erfindungsgemäße Verfahren insbesondere zur Herstellung von wässrigen Dispersionen mit hohem Feststoffgehalt größer 50 Gew.-%, bezogen auf das Gesamtgewicht der wässrigen Dispersion, eignet, wählt man die relativen Anteile aller Substanzen zweckmäßigerweise derart, dass das Gesamtgewicht der Monomere, bezogen auf das Gesamtgewicht der wässrigen Dispersion, größer 50,0 Gew.-%, zweckmäßigerweise größer 51,0 Gew.-%, vorzugsweise größer 52,0 Gew.-%, ist. Zu den in diesem Zusammenhang zu berücksichtigen Substanzen gehören neben den Monomeren auch alle anderen eingesetzten Substanzen, wie Wasser, Emulgator, Initiator, ggf. Regler und Schutzkolloide usw.

Die durch das Verfahren erhältlichen wässrigen Dispersionen zeichnen sich einen niedrigen Koagulatgehalt aus, welcher, bezogen auf das Gesamtgewicht der wässrigen Dispersion, vorzugsweise weniger als 5,0 Gew.-%, zweckmäßigerweise weniger als 3,0 Gew.-%, insbesondere weniger als 1,5 Gew.-% ist. Gemäß einer ganz besonders bevorzugten Ausführungsform der vorliegenden Erfindung weist die wässrige Dispersion, bezogen auf ihr Gesamtgewicht, weniger als 1,0 Gew.-%, vorzugsweise weniger als 0,5 Gew.-%, zweckmäßigerweise weniger als 0,25 Gew.-%, insbesondere 0,10

Gew.-% oder weniger, Koagulat auf. Dabei bezeichnet der Begriff "Koagulat" in diesem Zusammenhang wasserunlösliche Bestandteile, welche vorzugsweise durch Filtration der Dispersion zweckmäßigerweise über eine Filtermanschette mit eingespanntem Filtergewebe Nr. 0.90 DIN 4188 abfiltriert werden können.

Das erfindungsgemäße Kern-Schale-Teilchen kann aus der Dispersion beispielsweise durch Sprühtrocknen, Gefrierkoagulation, Ausfällen durch Elektrolytzusatz oder durch mechanische oder thermische Belastung, wie sie gemäß DE 27 50 682 A1 oder US 4,110,843 mittels eines Entgasungsextruders durchführbar ist, gewonnen werden. Das Verfahren der Sprühtrocknung ist am gebräuchlichsten, obwohl die anderen genannten Verfahren den Vorzug haben, dass dabei die wasserlöslichen Polymerisationshilfsstoffe wenigstens teilweise von dem Polymerisat abgetrennt werden.

Gegebenenfalls kann die PMMA-Formmasse noch zusätzlich mit Diffusorperlen abgemischt werden, un lichtstreuende Eigenschaften zu erreichen. Die Herstellung der Diffusorperlen ist beispielsweise in der DE 42 319 95 in den Beispielen 1 bis 7 beschrieben. Die Menge an Diffusorperlen, bezogen auf die Menge an nichtstreuender Formmasse kann zwischen 0,1 Masse-% und 60 Masse-% betragen, bevorzugt zwischen 0,2 Masse-% und 50 Masse-% und ganz besonders bevorzugt zwischen zwischen 0,5 Masse-% und 45 Masse-%.

Als thermoplastisches Polyurethan wird ein Produkt mit aliphatischen Verbindungseinheiten verwendet. Polyurethane (PUR) sind Polymere, in deren Makromolekülen die Wiederholungseinheiten durch Urethan-Gruppierungen -NH-CO-O-verknüpft sind. Polyrurethane werden im allg. erhalten durch Polyaddition aus zwei- oder höherwertigen Alkoholen u. Isocyanaten gemäß

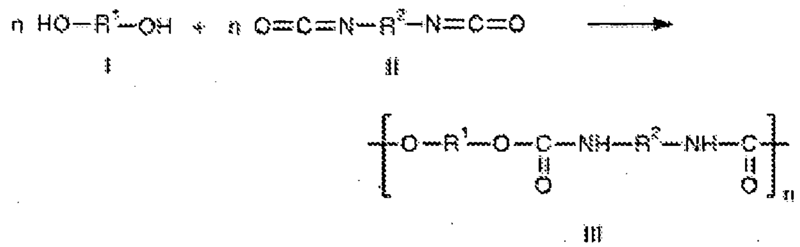

R1 u. R2 können dabei für niedermolekulare oder selbst schon polymere aliphatische od. aromatische Gruppen stehen. Technisch. wichtige PUR werden hergestellt aus Polyester- und/oder Polyetherdiolen und z.B. 2,4-bzw. 2,6-Toluoldiisocyanat (TDI, R2 = C6H3 -CH3), 4,4'-Methylendi(phenylisocyanat) (MDI, R2 = C6H4 -CH2 -C6H4), 4,4'-Methylendicyclohexylisocyanat (HMDI, R2 = C6H10 -CH2 -C6H10) od. Hexamethylendiisocyanat [HDI, R2 = (CH2)6].
Allgemein kann die Synthese der PUR Lösungsmittel.-frei od. in inerten organischen. Lösungsmitteln erfolgen. Als Katalysatoren für die Polyaddition werden vielfach bestimmte Amine oder organische ZinnVerbindungen. eingesetzt. Der Einsatz von bisfunktionellen Alkoholen und Isocyanaten in äquimolaren Verhältnissen führt zu linearen PUR. Verzweigte und vernetzte Produkte fallen bei Mitverwendung von höherfunktionellen Edukten oder auch bei Isocyanat-Überschuß an, bei dem Isocyanat-Gruppen mit Urethan- bzw. Harnstoff-Gruppen unter Ausbildung von Allophanat- bzw. Biuret-Strukturen reagieren, z.B.:

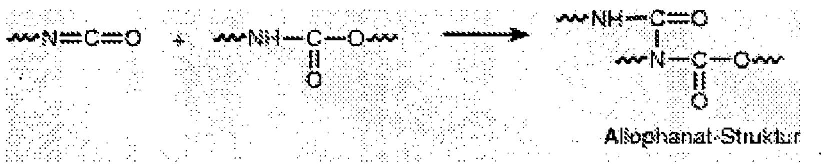

Allophanat-Struktur

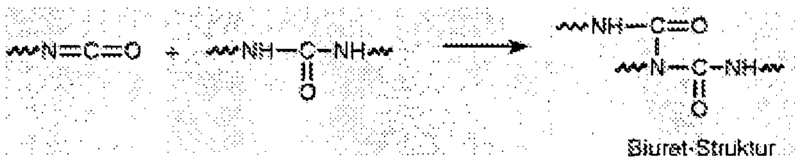

Biuret-Struktur

Entsprechend fallen je nach Wahl und stöchiometrischen Verhältnis der Ausgangsstoffe PUR mit sehr unterschiedlichen mechanischen Eigenschaften an, die als Bestandteile von Klebstoffen und Lacken (P.-Harze), als Ionomere, als thermoplastische Material für Lagerteile, Rollen, Reifen, Walzen verwendet werden und als mehr oder weniger harte Elastomere in Faserform (Elastofasern, Kurzz. PUE für diese Elastan- od. Spandex-Fasern) od. als Polyether- bzw. Polyesterurethan-Kautschuk (Kurzz. EU bzw. AU nach DIN ISO 1629: 1981-10), als duroplastische Gießharze (auch glasfaserverstärkt) u. v. a. aber als Schaumkunststoffe vielfältige Einsatzmöglichkeiten finden; s. a. Polyurethan-Kautschuke, Polyurethan-Lacke, Polyurethan-Harze. Weiterhin wurden PUR u.a. in Kunststoffe 85, 1616 (1995), Batzer 3, 158-170

Batzer 3, 158-170; Dominninghaus (5.), S. 1140 ff.; Encycl. Polym. Sci. Eng. 13, 243-303; Houben-Weyl E 20/2, 1561-1721 beschrieben.

Erfindungsgegenstand und Beispiele

Abmischung der Formmassen

Beispiel A: Hier wurde ein TPU (Desmopan® W DP85786A, Fa. Bayer) mit PLEXIGLAS® zk5HC von der Fa. Röhm GmbH & Co. KG mithilfe eines Extruders compoundiert (Verhältnis TPU / PLEXIGLAS® zk5HC: 1 / 2,75). Die Extrusionstemperatur betrug zwischen 200 Grad Celsius und 260 Grad Celsius.

Neben dieser Abmischung werden folgende Formmassen als Vergleiche angeführt:

PLEXIGLAS® zk50, Fa. Röhm

Vergleichsbeispiel 1: Abmischung aus einem Silikonmodifier, hergestellt wie in Beispiel 2 in WO 2003/066695 beschrieben, mit PLEXIGLAS® 7H der Fa. Röhm GmbH & Co. KG (Silikonmodifiergehalt: 25 Gew.-%)

Vergleichsbeispiel 2: Abmischung aus K/S/S Modifier und PLEXIGLAS® 7N hergestellt wie in Beispiel B in DE 102 600 65 A1 beschrieben.

Vergleichsbeispiel 3: Hier wurde ein TPU (Desmopan® W DP85786A, Fa. Bayer AG) mit PLEXIGLAS® 7M von der Fa. Röhm GmbH & Co. KG mithilfe eines Extruders compoundiert (Verhältnis TPU / 7M: 1 / 2,75).

Prüfung der Formmassen

Aus den abgemischten Formmassen wurden Prüfkörper hergestellt. Die Formmassen bzw. die entsprechenden Prüfkörper wurden nach folgenden Methoden geprüft:

| | |
|---|---|
| Viskosität $\eta s$ (220°C/5M Pa) | Bestimmung der Schmelzviskosität,<br>Prüfnorm. DIN 54811: 1984 |
| MVR (230°C/3,8kg) | Bestimmung des Volumen-Fließindex,<br>Prüfnorm ISO 1133: 1997 |
| Mini-Vicat (16h/80°C) | Bestimmung der Vicat-Erweichungstemperatur mit der Mini-Vicat - Anlage<br>Prüfnorm DIN ISO 306. Aug. 1994 |
| SZ (Charpy) | Bestimmung der Charpy - Kerbschlagzähigkeit,<br>Prüfnorm: ISO 179 |
| E-Modul | Bestimmung des E-Moduls,<br>Prufnorm: ISO 527-2 |
| Transmission (D 65/10°) | Messung von Transmission bei D65 und 10° an einem Probeköper mit einer Schichtdicke von 3 mm,<br>Prüfnorm DIN 5033/5036 |

Die Ergebnisse der Prüfungen an den Abmischungen sind in Tabelle 1 zu sehen

Man erkennt eindeutig die Vorteile der erfindungsgemäßen Abmischung gegenüber den herkömmlich schlagzähmodifizierten Formmassen (Vergleich 1, 2, 3 und PLEXIGLAS® zk50):

Die Schlagzähigkeit ist mit 124 kJ/m2 bei 23°C und 50 kJ/m2 bei -10 °C sehr hoch. Auch bei -40 °C ist mit 23 kJ/m2 eine gewisse Schlagzähigkeit vorhanden.

Die Transmission einer 3mm dicken Platte hieraus bei Raumtemperatur ist mit über 80 % für die vorgesehene beispielhafte Anwendung Skifolien noch ausreichend.

Mit einem E-Modul von über 1200 MPa besitzt der Formkörper aus der zu schützenden Abmischung gute mechanische Eigenschaften.

Die Wärmeformbeständigkeit ist mit einer Vicat Erweichungstemperatur von über 85 °C für die Anwendungen wie Skifolien ausreichend hoch.

Durch die niedrige Schmelzviskosität (vergleiche auch MVR) lässt sich das Material gut verarbeiten.

Folien aus diesen Blends lassen sich deutlich leichter bedrucken als hier üblich eingesetzte Folien aus Polyamid oder TPU / MABS - Blends und sind witterungsbeständig.

Tabelle 1

| Abmischung | Einheit | Vergl. 1 | Vergl. 2 | Vergl 3 | PLEXIGLAS® zk50 | A |
|---|---|---|---|---|---|---|
| Eigenschaft | | | | | | |
| Viskosität ηs (220°C/5MPa) | Pas | 6940 | 3400 | 171 | n.b | 500 |
| MVR (230°C, 3,8kg) | mL / 10min | 0,3 | 1,4 | 42 | 0,1 | 9,15 |
| Mini-Vicat(16h/80°C) | °C | 99 | 98,5 | 89,7 | 75 | 87 |
| Transmission SZ (Charpy) | % | n.b. | 64,6 | 80,1 | 89 | 83 |
| 23 °C | kJ/$m^2$ | 39 | 122 | 24,3 | kein Bruch | 124 |
| -10 °C | kJ/$m^2$ | - | | | | 50 |
| -20 °C | kJ/$m^2$ | 35 | 92 | 22,9 | 110,4 | 26 |
| -40 °C | kJ/$m^2$ | 35 | 53 | 21,4 | 22,9 | 23 |
| E-Modul | MPa | 2120 | 1620 | n.b. | 950 | 1520 |

## Patentansprüche

1. Transparente, kälteschlagzähe Kunststoffmischung aus einem thermoplastischen Polyurethan (TPU) und aus Poly(meth)acrylat (PMMA) **dadurch gekennzeichnet,**
**dass** als PMMA ein schlagzähmodifiziertes PMMA verwendet wird.

2. Kunststoffmischung nach Anspruch 1,
**dadurch gekennzeichnet,**
**dass** das Masseverhältnis von TPU zu PMMA zwischen 10 - 50 zu 90 - 50 Teile beträgt.

3. Kunststoffmischung nach Anspruch 1,
**dadurch gekennzeichnet,**
**dass** das Masseverhältnis von TPU zu PMMA zwischen 20 - 40 zu 80 - 60 Teile beträgt.

4. Kunststoffmischung nach Anspruch 1,
**dadurch gekennzeichnet,**
**dass** als schlagzähmodifiziertes PMMA die schlagzähe Formmasse aus einer Mischung bestehend aus

   10 bis 50 Masse-% eines Schlagzähmodifiers
   50 bis 90 Masse-% einer PMMA Formmasse.

5. Kunststoffmischung nach Anspruch 1,
**dadurch gekennzeichnet,**
**dass** das TPU mithilfe von aliphatischen Isocyanten hergestellt wird.

6. Kunststoffmischung nach Anspruch 1,
**dadurch gekennzeichnet,**
**dass** als PMMA ein schlagzähmodifiziertes PMMA mit 1 bis 50 Gew.-% Streupartikel, mit einem mittleren Teilchendurchmesser von 1 bis 300 μm, bezogen auf die gesamte Kunststoffmischung verwendet wird.

7. Verwendung der Kunststoffmischung nach einem der Ansprüche 1 - 6 zur Herstellung eines Kunststoffformkörpers mit einer Transmission von > 80 % (d = 3 mm), einer Charpy-Schlagzähigkeit bei 23° Celsius von >100 kJ/$m^2$, bei - 10° Celsius von > 30 kJ/$m^2$, bei - 20° Celsius von >20 kJ/$m^2$ und von einer Vicat-Erweichungstemperatur, bestimmt nach DIN ISO 306 (B) von > 80°Celsius und einem E-Modul von > 1.400 MPa.

8. Verwendung der Kunststoffmischung nach Anspruch 7 zur Herstellung von Folien.

9. Verwendung der Folien nach Anspruch 8 zum Beschichten von Sportgeräten.

10. Verwendung der Folien nach Anspruch 8 zum Beschichten von Karosseriebauteilen im Automobilbau.

11. Verwendung der Kunststoffmischung nach Anspruch 7 zur Herstellung von Spritzgussteilen.

12. Verwendung der Spritzgussteile nach Anspruch 11 als Anbauteile im Automobilbau.

13. Verwendung der Kunststoffmischung nach Anspruch 7 zur Herstellung von Kunststoffformkörpern mit Diffusorperlen.

## Claims

1. Transparent plastics mixture having low-temperature impact resistance composed of a thermoplastic polyurethane (TPU) and of poly(meth)acrylate (PMMA), **characterized in that** as PMMA an impact-modified PMMA is used.

2. Plastics mixture according to Claim 1,
**characterized in that**
the ratio by weight of TPU to PMMA is 10-50:90-50 parts.

3. Plastics mixture according to Claim 1,
**characterized in that**
the ratio by weight of TPU to PMMA is 20-40:80-60 parts.

4. Plastics mixture according to Claim 1,
**characterized in that**
as impact-modified PMMA the impact-resistant moulding composition composed of a mixture composed of from 10 to 50% by weight of an impact modifier from 50 to 90% by weight of a PMMA moulding composition is used.

5. Plastics mixture according to Claim 1,
**characterized in that**
the TPU is prepared with the aid of aliphatic isocyanates.

6. Plastics mixture according to Claim 1,
**characterized in that**
as PMMA, an impact-modified PMMA with from 1 to 50% by weight of scattering particles, with an average particle diameter of from 1 to 300 μm, based on the entire plastics mixture, is used.

7. Use of the plastics mixture according to any of Claims 1 to 6 for production of a plastics moulding with transmittance > 80% (t = 3 mm), Charpy impact resistance > 100 kJ/$m^2$ at 23°Celsius, > 30 kJ/$m^2$ at -10°Celsius, and > 20 kJ/$m^2$ at -20°Celsius, and having a Vicat softening point > 80°Celsius, determined to DIN ISO 306 (B) and modulus of elasticity > 1400 MPa.

8. Use of the plastics mixture according to Claim 7 for production of foils.

9. Use of the foils according to Claim 8 for coating of sports equipment.

10. Use of the foils according to Claim 8 for coating of bodywork components in automobile construction.

11. Use of the plastics mixture according to Claim 7 for production of injection-moulded parts.

12. Use of the injection-moulded parts according to Claim 11 as add-on parts in automobile construction.

13. Use of the plastics mixture according to Claim 7 for production of plastics mouldings with diffuser beads.

## Revendications

1. Mélange de plastiques transparent résistant aux chocs à froid, constitué par un polyuréthane thermoplastique (TPU) et un poly(méth)acrylate (PMMA), **caractérisé en ce que** un PMMA à résistance aux chocs modifiée est utilisé en tant que PMMA.

2. Mélange de plastiques selon la revendication 1, **caractérisé en ce que** le rapport en masse entre le TPU et le PMMA est de 10 à 50 sur 90 à 50 parties.

3. Mélange de plastiques selon la revendication 1, **caractérisé en ce que** le rapport en masse entre le TPU et le PMMA est de 20 à 40 sur 80 à 60 parties.

4. Mélange de plastiques selon la revendication 1, **caractérisé en ce que** le matériau de moulage résistant aux chocs d'un mélange constitué par
10 à 50 % en masse d'un modificateur de la résistance aux chocs,
50 à 90 % en masse d'un matériau de moulage PMMA est utilisé en tant que PMMA à résistance aux chocs modifiée.

5. Mélange de plastiques selon la revendication 1, **caractérisé en ce que** le TPU est fabriqué à l'aide d'isocyanates aliphatiques.

6. Mélange de plastiques selon la revendication 1, **caractérisé en ce qu'**un PMMA à résistance aux chocs modifiée contenant 1 à 50 % en poids de particules diffusées, d'un diamètre de particule moyen de 1 à 300 $\mu$m, par rapport au mélange de plastiques total, est utilisé en tant que PMMA.

7. Utilisation du mélange de plastiques selon l'une quelconque des revendications 1 à 6 pour la fabrication d'un corps moulé en plastique présentant une transmission > 80 % (d = 3 mm), une résistance aux chocs Charpy à 23 °Celsius > 100 kJ/$m^2$, à -10 °Celsius > 30 kJ/$m^2$, à -20 °Celsius > 20 kJ/$m^2$, et une température de ramollissement de Vicat, déterminée selon DIN ISO 306 (B) > 80 °Celsius, et un module E > 1 400 MPa.

8. Utilisation du mélange de plastiques selon la revendication 7 pour la fabrication de feuilles.

9. Utilisation des feuilles selon la revendication 8 pour le revêtement d'appareils de sport.

10. Utilisation des feuilles selon la revendication 8 pour le revêtement de composants de carrosseries dans la construction d'automobiles.

11. Utilisation du mélange de plastiques selon la revendication 7 pour la fabrication de pièces moulées par injection.

12. Utilisation des pièces moulées par injection selon la revendication 11 en tant que composants additionnels dans la construction d'automobiles.

13. Utilisation du mélange de plastiques selon la revendication 7 pour la fabrication de corps moulés en plastiques comprenant des perles de diffusion.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5539053 A, Avenel
- EP 0272975 A, ALTULOR
- US 3700752 A, Hutchnison
- DE 4136993, BASF AG
- US 3793402 A
- WO 2003066695 A
- DE 10260065 A1
- EP 0113924 A
- EP 0522351 A
- EP 0465049 A
- EP 0683028 A
- DE 3343766
- DE 3210891
- DE 2850105
- DE 2742178
- DE 3701579
- DE 2750682 A1
- US 4110843 A
- DE 4231995

### In der Beschreibung aufgeführte Nicht-Patentliteratur

- Nach Fox T. G. *Bull. Am. Physics Soc.,* 1956, vol. 1 (3), 123
- Fachmann dem Polymer Handbook. J. Wiley & Sons, 1975
- *Nachr. Chem. Tech. Lab.,* 1995, vol. 43, 553-566
- Th. Völker. **H. RAUCH-PUNTIGAM.** Acryl- und Methacrylverbindungen. Springer, 1967
- **KIRK-OTHMER.** Encyclopedia of Chemical Technology. J. Wiley, 1978, vol. 1, 386ff
- **HOUBEN-WEYL.** Methoden der organischen Chemie. Georg Thieme, 1961, vol. XIV-1, 66
- **KIRK-OTHMER.** Encyclopedia of Chemical Technology. J. Wiley, 1978, vol. 1, 296ff
- *Kurzz. EU bzw. AU nach DIN ISO 1629,* Oktober 1981
- *Kunststoffe,* 1995, vol. 85, 1616
- *Batzer,* vol. 3, 158-170
- *Domininghaus,* 1140 ff
- Encycl. Polym. Sci. Eng. Houben-Weyl, vol. 13, 243-303